# EUROPEAN PATENT APPLICATION

(11) **EP 4 608 071 A1**
(43) Date of publication of application: **27.08.2025**
(21) Application number: 23907772.0
(22) Date of filing: 20.12.2023
(51) Int. Cl.: H05B 3/00, H05B 47/105, H01M 4/04

(54) **HEAT SOURCE DEVICE**

(30) Priority: 22.12.2022 KR 20220181900
(71) Applicant: LG Energy Solution, Ltd., Seoul 07335 (KR)
(72) Inventor: LEEM, Gui Taek, Daejeon 34122 (KR); HEO, Jun Gyu, Daejeon 34122 (KR)
(74) Representative: Goddar, Heinz J.
(86) International application number: PCT/KR2023/021176
(87) International publication number: WO 2024/136489

(57) **Abstract**

The present invention relates to a heat source device, and a heat source device according to one embodiment of the present invention may include a lamp which radiates electromagnetic waves for generating radiant heat, a plate which is disposed between the electrode and the lamp and through which at least some of the electromagnetic waves radiated by the lamp pass, a distance sensor which detects a distance between the lamp and the plate, and a driving unit which controls the distance between the plate and the lamp.

## Description

### [TECHNICAL FIELD]

### CROSS-REFERENCE TO RELATED APPLICATIONS

This application claims priority to and the benefit of Korean Patent Application No. 10-2022-0181900, filed on December 22, 2022, the disclosure of which is incorporated herein by reference in its entirety.

### TECHNICAL FIELD

The present invention relates to a heat source device.

### [BACKGROUND ART]

Electrode coaters are apparatuses which coat aluminum foils and copper foils with lithium-ion battery active materials and dry the coated aluminum foils and copper foils. In a battery electrode process in an electrode coater, after a mixing process of mixing a positive electrode active material and a negative electrode active material is completed, a coating process for coating electrodes is performed. In the coating process, the coater thinly coats an aluminum foil and a copper foil with positive and negative electrode slurries, which are intermediate products produced in the mixing process, respectively. In this process, a heat source device which thermally dries the coated electrodes is required.

In the conventional case, in an oven used as a heat source device, a phenomenon in which a medium wave infrared (MIR) lamp used as an auxiliary heat source device is damaged due to physical interference between the MIR lamp and a screen which covers the MIR lamp and overheating of the MIR lamp occurs. Accordingly, a heat source device capable of preventing damage to a lamp is required.

The above-described background art is possessed or acquired by the inventor in a process of deriving the content of the present invention and may not necessarily be considered as known technology disclosed to the general public before this application.

### [DISCLOSURE]

### [TECHNICAL PROBLEM]

Accordingly, the present invention is directed to providing a heat source device capable of controlling a distance between a lamp used as a heat source and a screen which covers the lamp.

The present invention is also directed to providing a heat source device capable of measuring a surface temperature of a lamp in real time.

The present invention is also directed to providing a heat source device capable of preventing damage to a lamp.

The present invention is also directed to providing a heat source device capable of improving the drying quality of an electrode.

### [TECHNICAL SOLUTION]

One aspect of the present invention provides a heat source device including a lamp which radiates electromagnetic waves for generating radiant heat, a plate which is disposed between the electrode and the lamp and through which at least some of the electromagnetic waves radiated by the lamp pass, a distance sensor which detects a distance between the lamp and the plate, and a driving unit which controls the distance between the plate and the lamp.

The heat source device may further include a temperature sensor which detects a surface temperature of the lamp.

The heat source device may further include a control unit which controls the driving unit on the basis of data detected by the distance sensor and the temperature sensor.

The control unit may include a processor which processes the data received from the distance sensor and the temperature sensor and a user interface which is connected to the processor and visualizes and displays the data.

The processor may be electrically connected to the distance sensor and the temperature sensor and may obtain a distance between the lamp and the plate and a surface temperature of the lamp in real time.

The lamp may be provided as a plurality of lamps.

The plurality of lamps may be spaced apart from each other at equal intervals and arranged in a row.

At least one plate hole through which the electromagnetic waves pass may be formed in the plate.

The driving unit may include a first cylinder provided on one end portion of the plate and a second cylinder provided on the other end portion of the plate.

As lengths of the first cylinder and the second cylinder are lengthened or shortened, the distance between the plate and the lamp may be controlled.

The heat source device may further include a housing part which accommodates the lamp, the plate, and the distance sensor.

The first cylinder and the second cylinder may be fastened to the housing part.

The heat source device may further include a hot air blower which communicates with an internal space of the housing part and forcibly blows high-temperature air into the housing part.

The distance sensor may be fastened to the plate.

### [ADVANTAGEOUS EFFECTS]

A heat source device according to one embodiment of the present invention can control a distance between a lamp used as a heat source and a screen which covers the lamp.

A heat source device according to one embodiment of the present invention can measure a surface temperature of a lamp in real time.

A heat source device according to one embodiment of the present invention can prevent damage to a lamp.

A heat source device according to one embodiment of the present invention can improve the drying quality of an electrode.

In addition, effects of the present invention may include effects easily predicted by those skilled in the art from the configurations according to embodiments of the present invention.

### [DESCRIPTION OF DRAWINGS]

FIG. 1 is a view illustrating a heat source device according to a first embodiment of the present invention.
FIG. 2 is a view illustrating a shape of a plate of the heat source device according to the first embodiment of the present invention.
FIG. 3 is a view illustrating a heat source device according to a second embodiment of the present invention.
FIG. 4 is a view illustrating a heat source device according to a third embodiment of the present invention.

### [MODES OF THE INVENTION]

Hereinafter, exemplary embodiments of the present invention will be described in detail with reference to the accompanying drawings to be easily carried out by those skilled in the art. The following description is one of various aspects, and when the embodiments are described, the specific description of well-known functions or configurations will be omitted in order to clearly describe the gist of the present invention.

In the present specification, when reference numerals are assigned to components of each drawing, the same or similar components are assigned the same or similar reference numerals throughout the specification. A component in one embodiment having a function in common with a component included in another embodiment will be described with the same name. Terms and words used in the present specification and claims should not be interpreted as being limited to commonly used meanings or meanings in dictionaries and should be interpreted as having meanings and concepts which are consistent with the technological scope of the present invention based on the principle that inventors have appropriately defined concepts of the terms in order to describe the present invention in the best way.

In addition, the present invention is not limited to the embodiments and may be variously modified and changed from the description by those skilled in the art. Therefore, the spirit of the invention is defined not by the detailed description of the invention but by the appended claims, and encompasses all modifications and equivalents that fall within the scope of the appended claims.

### First Embodiment

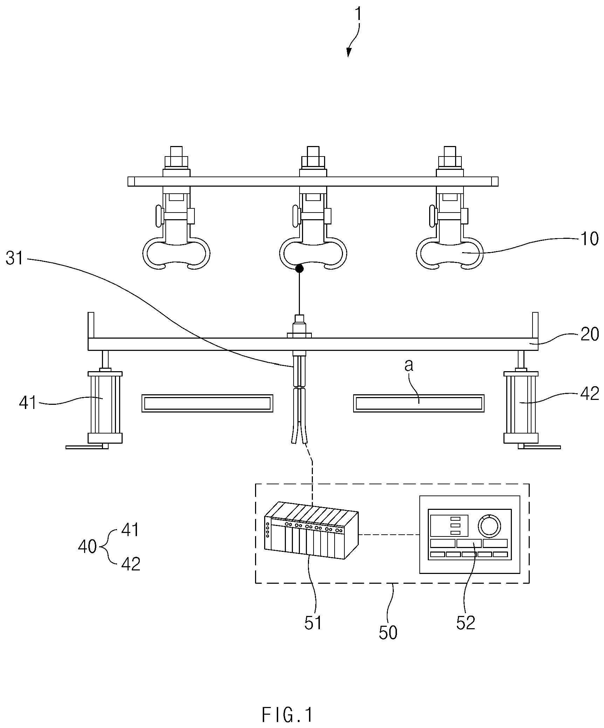

FIG. 1 is a view illustrating a heat source device 1 according to a first embodiment of the present invention.

Referring to FIG. 1, the heat source device 1 according to the first embodiment of the present invention may include a lamp 10, a plate 20, a distance sensor 31, a driving unit 40, and a control unit 50.

The lamp 10 may radiate electromagnetic waves for drying an electrode a. The lamp 10 may dry a coating material of the electrode by radiating the electromagnetic waves to generate radiant heat at the electrode a. The lamp 10 may be a medium wave infrared (MIR) lamp. The lamp 10 may radiate mid-infrared rays to generate the radiant heat at the electrode a. For example, a wavelength of the mid-infrared rays radiated by the lamp 10 may be in the range of 2 µm to 6 µm. The lamp 10 may be provided as a plurality of lamps 10. The plurality of lamps 10 may be spaced apart from each other at equal intervals and arranged side by side. The electrode a may be provided on an optical path of the electromagnetic waves radiated by the lamps 10.

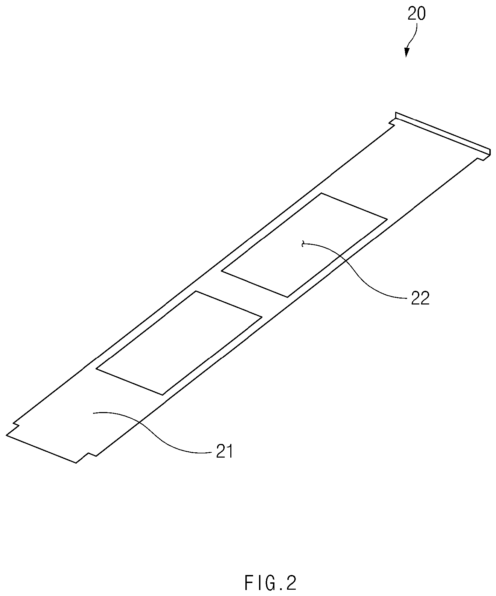

The plate 20 may allow at least some of the electromagnetic waves of the lamp 10, which are radiated toward the electrode a, to pass therethrough. The plate 20 may be provided to adjust the form and luminous intensity of the electromagnetic waves of the lamp 10, which are radiated toward the electrode a. The plate 20 may be disposed between the lamp 10 and the electrode a. The electromagnetic waves of the lamp 10 may be controlled to reach a specific position of the electrode a, which needs to be thermally dried, through the configuration of the plate 20. The plate 20 may be disposed parallel to an arrangement direction of the plurality of lamps 10. A plate hole which allows at least some of the electromagnetic waves of the lamp 10 to pass therethrough may be provided in the plate 20. A shape of the plate 20 will be described in detail with reference to FIG. 2 which will be described below.

The distance sensor 31 may be provided to detect a distance between the lamp 10 and the plate 20. For example, the distance sensor 31 may be a fiber sensor. Fiber sensors may be flexible and bent, allowing the fiber sensors to be stably installed even in narrow spaces. The distance sensor 31 may be disposed on the plate 20 to detect the distance between the plate 20 and the lamp 10. For example, the distance sensor 31 may be fixedly fastened to the plate 20. The distance sensor 31 may be mounted on a central portion of the plate 20. The distance sensor 31 may be electrically connected to the control unit 50. The distance between the lamp 10 and the plate 20 detected by the distance sensor 31 may be transmitted to the control unit 50.

The driving unit 40 may move a position of the plate 20. The driving unit 40 may be mounted on the plate. The driving unit 40 may include a plurality of cylinders. The driving unit may include a first cylinder 41 and a second cylinder 42. For example, the first cylinder 41 and the second cylinder 42 may be pneumatic cylinders driven by pneumatic pressure. The first cylinder 41 and the second cylinder 42 may be mounted on both end portions of the plate 20. The first cylinder 41 and the second cylinder 42 may be driven so that lengths thereof are lengthened or shortened. As the lengths of the first cylinder 41 and the second cylinder 42 are lengthened or shortened, the plate 20 may be moved. As the plurality of lamps 10 are fixed such that positions thereof do not move and the plate 20 is moved, the distance between the plate 20 and the plurality of lamps 10 may be controlled. For example, when the lengths of the first cylinder 41 and the second cylinder 42 are lengthened, the distance between the plate 20 and the lamp 10 may decrease, and when the lengths of the first cylinder 41 and the second cylinder 42 are shortened, the separation distance between the plate 20 and the lamp 10 may increase. The lengths of the first cylinder 41 and the second cylinder 42 may be lengthened or shortened to the same extent. Since the lengths of the first cylinder 41 and the second cylinder 42 are lengthened or shortened to the same extent, the separation distance between the plate 20 and the plurality of lamps 10 may be controlled while maintaining the inclination of the plate 20. When the degree of separation between the plate 20 and the lamp 10 is controlled by driving the driving unit 40, the distance between the plate 20 and the lamp 10, which is detected by the distance sensor 31, may be changed. The driving unit 40 may be electrically connected to the control unit 50. The driving of the driving unit 40 may be controlled by the control unit 50.

The control unit 50 may be provided to control the driving of the driving unit 40. The control unit 50 may be electrically connected to the distance sensor 31. The control unit 50 may receive data on the distance between the plate 20 and the lamp 10 from the distance sensor 31. The control unit 50 may be electrically connected to the driving unit 40. The control unit 50 may be electrically connected to the first cylinder 41 and the second cylinder 42. The control unit 50 may transmit an electrical signal to the driving unit 40 to control the driving of the driving unit 40. The control unit 50 may control the driving unit 40 on the basis of the data on the distance between the lamp 10 and the plate 20 detected by the distance sensor 31. For example, when the distance between the lamp 10 and the plate 20 detected by the distance sensor 31 is excessively small, since the lamp 10 may be heated due to heat reflected by the plate 20, and thus damage to the lamp may occur, the control unit 50 may transmit a feedback signal to the driving unit 40 to control the driving of the driving unit 40 so that the driving unit 40 moves the plate 20 in a direction away from the lamp 10. Since the intensity of radiant heat of the lamp transferred to the electrode a changes according to a position of the plate 20, the control unit 50 may control the driving of the driving unit 40 so that the plate 20 is set to an optimal position.

The control unit 50 may include a processor 51 and a user interface 52. The processor 51 may receive and process distance data from the distance sensor 31. The processor 51 may be electrically connected to the distance sensor 31 and the driving unit 40. The user interface may be electrically connected to the processor 51 and may visualize and display the distance data and the like processed by the processor through a display.

By adopting such a configuration, not only can a user of the heat source device 1 according to the first embodiment of the present invention check a distance between the plate 20 and the lamp 10 in real time, but also the inefficiency of a process occurring when the distance between the plate 20 and the lamp 10 is manually controlled can be significantly reduced. Accordingly, damage to the lamp 10 due to an error in the separation distance between the lamp 10 and the plate 20 can be significantly reduced, and in addition, a position of the plate 20 which should be changed for each drying process of the electrode a can be controlled by simple electrical manipulation.

FIG. 2 is a view illustrating the shape of the plate 20 of the heat source device according to the first embodiment of the present invention.

Referring to FIG. 2, the plate 20 of the heat source device according to the first embodiment of the present invention may include a plate body 21 and a plate hole 22. An exterior of the plate body 21 may be formed in a longitudinal rectangular shape. A longitudinal direction of the plate body 21 may be coincide with the direction in which the plurality of lamps are arranged. The plate hole 22 may be formed in the plate body 21. The plate hole 22 may be provided as a plurality of plate holes 22, and at least some of the electromagnetic waves of the lamp may pass through the plate holes 22. The size and number of the plate body 21 and the plate holes 22 formed in the plate body 21 may be changed according to a shape and a thickness of the electrode which needs to be dried.

### Second Embodiment

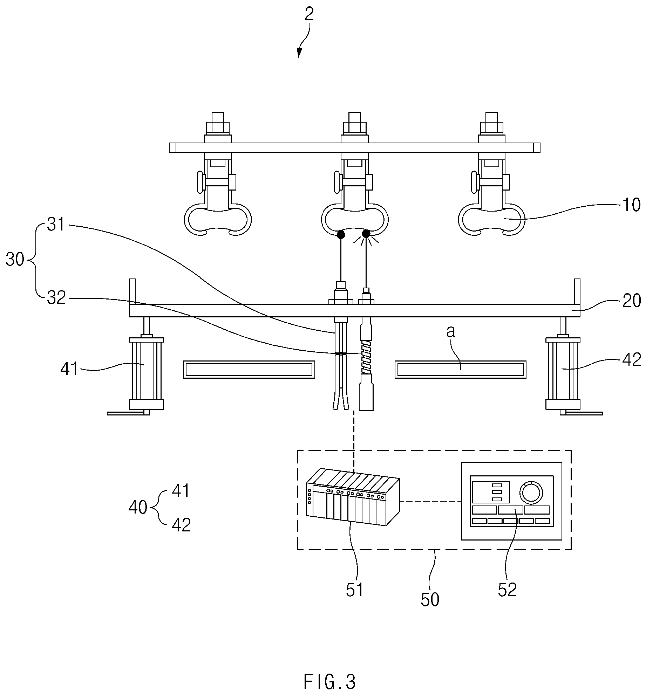

FIG. 3 is a view illustrating a heat source device 2 according to a second embodiment of the present invention.

The second embodiment of the present invention may be different from the first embodiment in that the second embodiment further includes a temperature sensor 32. The common content with the first embodiment will be omitted as much as possible, and the content of the second embodiment which is different from that of the first embodiment will be mainly described.

Referring to FIG. 3, the heat source device 2 according to the second embodiment of the present invention may include a lamp 10, a plate 20, a sensor unit 30, a driving unit 40, and a control unit 50

The lamp 10 may radiate electromagnetic waves for generating radiant heat at an electrode a. The plate 20 may be disposed between the lamp 10 and the electrode a and may allow at least some of the electromagnetic waves radiated by the lamp 10 to pass therethrough toward the electrode a. The driving unit 40 may include a first cylinder 41 and a second cylinder 42, and as the first cylinder 41 and the second cylinder 42 are driven so that lengths thereof are shortened or lengthened, a separation distance between the plate 20 and the lamp 10 may be controlled. The control unit 50 may be electrically connected to the sensor unit 30 and the driving unit 40. The control unit 50 may include a processor 51 which processes data detected by the sensor unit 30 and a user interface 52 which visualizes and displays the processed data.

The sensor unit 30 may include a distance sensor 31 and the temperature sensor 32. The distance sensor 31 may detect the distance between the plate 20 and the lamp 10. The temperature sensor 32 may detect a surface temperature of the lamp 10. For example, the distance sensor 31 and the temperature sensor 32 may be provided on and fixedly fastened to the plate 20. The distance sensor 31 and the temperature sensor 32 may be electrically connected to the control unit 50. The distance sensor 31 and the temperature sensor 32 may be electrically connected to the processor 51 of the control unit 50. The distance sensor 31 and the temperature sensor 32 may transfer detected distance data and temperature data to the control unit 50, respectively. The overheating of the surface of the lamp 10 may be detected and responded to in advance by obtaining surface temperature data of the lamp 10 through the temperature sensor 32. Accordingly, damage to the lamp 10 can be significantly reduced. For example, when a detected temperature of the surface of the lamp 10 is abnormally high, the control unit 50 may control the driving of the driving unit 40 so that the separation distance between the plate 20 and the lamp 10 increases.

### Third Embodiment

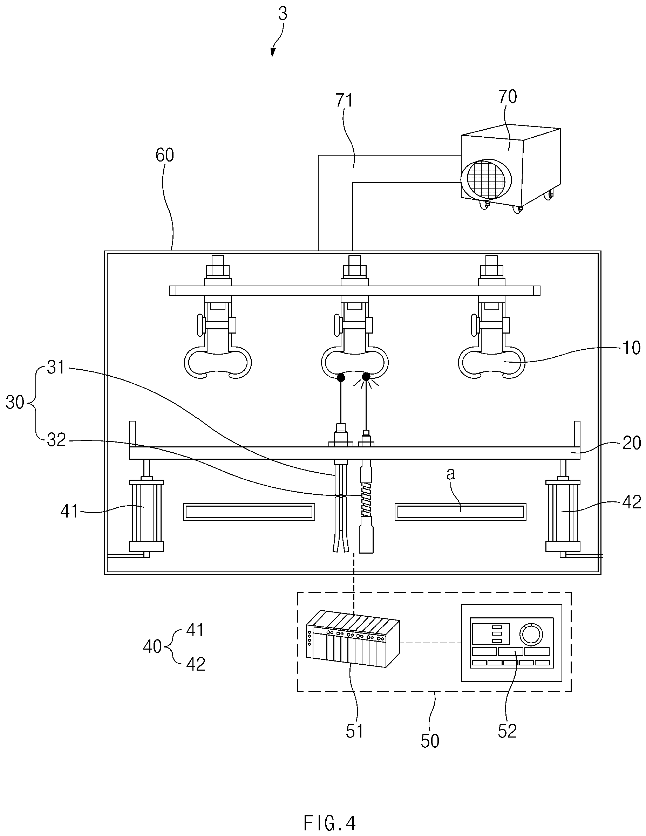

FIG. 4 is a view illustrating a heat source device 3 according to a third embodiment of the present invention.

The third embodiment of the present invention may be different from the second embodiment in that the third embodiment further includes a housing part 60 and a hot air blower 70. The common content with the second embodiment will be omitted as much as possible, and the content of the third embodiment which is different from that of the second embodiment will be mainly described.

Referring to FIG. 4, the heat source device 3 according to the third embodiment of the present invention may include a lamp 10, a plate 20, a sensor unit 30, a driving unit 40, a control unit 50, the housing part 60, and the hot air blower 70. The sensor unit 30 may include a distance sensor 31 and a temperature sensor 32. The driving unit 40 may include a first cylinder 41 and a second cylinder 42. The control unit 50 may include a processor 51 and a user interface 52.

The housing part 60 may accommodate a plurality of lamps 10, the plate 20, the sensor unit 30, and the driving unit 40. An internal space which accommodates the lamp 10, the plate 20, the sensor unit 30, and the driving unit 40 may be provided in the housing part 60. The plurality of lamps 10 may be fixedly fastened to an upper surface of the housing part 60. The first cylinder 41 and the second cylinder 42 mounted on both ends portions of the plate 20 may be fixedly fastened to an inner surface of the housing part 60. The first cylinder 41 and the second cylinder 42 may support the plate 20 at a distance from the inner surface of the housing part. The distance sensor 31 and the temperature sensor 32 of the sensor unit 30 may be fixedly fastened to the plate 20 and move along with the plate 20 as the plate 20 moves, or mounted in the housing part 60. The control unit 50 may be disposed outside the housing part 60.

The hot air blower 70 may be arranged to communicate with the internal space of the housing part 60. The hot air blower 70 may communicate with the internal space of the housing part 60 through a duct 71. As the hot air blower 70 forcibly blows high-temperature air into the internal space of the housing part 60, the hot air blower 70 may operate along with the plurality of lamps 10 as a heat source which dries the coated electrode a.

By adopting such a configuration, the electrode a disposed in the housing part 60 can be doubly dried by high-temperature air and the radiant heat of the lamp 10.

In the above description, although the present invention has been described with reference to limited embodiments and drawings, the above description is only an illustrative description of the technical spirit of the present invention, and various changes and modifications may be made by those skilled in the art without departing from the essential characteristics of the present invention.

Therefore, the embodiments disclosed in the present invention are for only describing and not for limiting the spirit of the present invention, and the scope of the spirit of the present invention is not limited by the embodiments. It should be interpreted that the scope of the invention is defined by the appended claims and encompasses all modifications and equivalents that fall within the scope of the appended claims.

### [REFERENCE NUMERALS]

1, 2, 3: Heat Source Device
10: Lamp
20: Plate
21: Plate Body
22: Plate Hole
30: Sensor Unit
31: Distance Sensor
32: Temperature Sensor
40: Driving Unit
41: First Cylinder
42: Second Cylinder
50: Control Unit
51: Processor
52: User Interface
60: Housing Part
70: Hot Air Blower
71: Duct
A: Electrode

## Claims

1. A heat source device, which thermally dries a material with which an electrode is coated, the heat source device comprising:
a lamp which radiates electromagnetic waves for generating radiant heat;
a plate which is disposed between the electrode and the lamp and through which at least some of the electromagnetic waves radiated by the lamp pass;
a distance sensor which detects a distance between the lamp and the plate; and
a driving unit which controls the distance between the plate and the lamp.

2. The heat source device of claim 1, further comprising a temperature sensor which detects a surface temperature of the lamp.

3. The heat source device of claim 2, further comprising a control unit which controls the driving unit on the basis of data detected by the distance sensor and the temperature sensor.

4. The heat source device of claim 3, wherein the control unit includes:
a processor which processes data received from the distance sensor and the temperature sensor; and
a user interface which is connected to the processor and visualizes and displays the data.

5. The heat source device of claim 4, wherein the processor is electrically connected to the distance sensor and the temperature sensor and obtains a distance between the lamp and the plate and a surface temperature of the lamp in real time.

6. The heat source device of claim 1, wherein the lamp is provided as a plurality of lamps.

7. The heat source device of claim 6, wherein the plurality of lamps are spaced apart from each other at equal intervals and arranged in a row .

8. The heat source device of claim 1, wherein at least one plate hole through which the electromagnetic waves pass is formed in the plate.

9. The heat source device of claim 1, wherein the driving unit includes:
a first cylinder provided on one end portion of the plate; and
a second cylinder provided on the other end portion of the plate.

10. The heat source device of claim 9, wherein, as lengths of the first cylinder and the second cylinder are lengthened or shortened, the distance between the plate and the lamp is controlled.

11. The heat source device of claim 9, further comprising a housing part which accommodates the lamp, the plate, and the distance sensor.

12. The heat source device of claim 11, wherein the first cylinder and the second cylinder are fastened to the housing part.

13. The heat source device of claim 11, further comprising a hot air blower which communicates with an internal space of the housing part and forcibly blows high-temperature air into the housing part.

14. The heat source device of claim 1, wherein the distance sensor is fastened to the plate.
